# EUROPEAN PATENT SPECIFICATION

(11) **EP 3 072 683 B1**
(45) Date of publication and mention of the grant of the patent: **04.11.2020**
(21) Application number: 14828052.2
(22) Date of filing: 21.11.2014
(51) Int. Cl.: B32B 15/02, B32B 15/08, B32B 15/085, B62D 29/00, B32B 15/14, B32B 27/12, B32B 27/32, B32B 1/00

(54) **SEMI-FINISHED PRODUCT MANUFACTURED FROM PREPREG, THREE-DIMENSIONAL PREFORMED BODY AND OVERMOULDED PART**
AUS PREPREG HERGETELLTES HALBFERTIGPRODUKT, DREI-DIMENSIONALES VORGEFORMTES ELEMENT UND ÜBERGEFORMTES TEIL.
PRODUIT SEMI-FINI MANUFACTURÉ À PARTIR DE PRÉPREGS, ÉLÉMENT PRÉFORMÉ TRIMENSIONNEL ET PARTIE SURMOULÉE.

(30) Priority: 22.11.2013 CN 201320747460 U
(43) Date of publication of application: 28.09.2016
(73) Proprietor: Compagnie Plastic Omnium, 69007 Lyon (FR)
(72) Inventor: DEMANGE, Jean-Yves, 01500 Amberieu en Bugey (FR)
(74) Representative: Remy, Vincent Noel Paul
(86) International application number: PCT/IB2014/066238
(87) International publication number: WO 2015/075683

(56) References cited:
- EP-A1- 1 046 666
- WO-A1-2004/071761
- DE-U1-202004 003 214
- US-A1- 2010 140 984

## Description

### Technical Field

The present invention relates to the field of prepreg products, and more particularly to semi-products made of prepregs, and three-dimensional preforms and overmolded parts made of the semi-products.

### Background

A prepreg, an intermediate material commonly used for making a composite material, is usually made of a resin matrix and a reinforcement (such as fibers or fabrics) impregnated in the matrix. The prepreg has higher mechanical strength due to the inclusion of the reinforcement, and is often used to make parts that need to be partially or wholly reinforced, such as motor vehicle components. Commercially available prepregs are often in a sheet or roll form.

The motor vehicle components that need to be reinforced are usually three-dimensional, and sometimes of a complex shape. A known method for making such a three-dimensional component includes the steps of:
Step 1: cutting a purchased prepreg into a suitable shape and dimension (which is obtained by two-dimensionally deploying a desired three-dimensional preform) and stacking a plurality of layers of prepregs of a suitable shape and dimension as required to form a semi-product;
Step 2: heating and then hot stamping the semi-product to form a three-dimensional preform;
Step 3: taking the three-dimensional preform out of a hot stamping die and then mechanically machining (such as contour finishing or drilling) the same after cooling to provide it with a desired final dimension and geometrical configuration;
Step 4: re-heating the three-dimensional preform to a temperature higher than a melting point of a prepreg resin matrix, so as to provide the prepreg resin matrix and an overmolded resin with good adhesion in subsequent overmolding;
Step 5: transferring the hot three-dimensional preform to an overmolding die to overmold a thermoplastic resin portion on the three-dimensional preform by means of injection molding, thereby finally obtaining a three-dimensional component including a reinforcement (composed of the three-dimensional preform) and an overmolded resin portion.

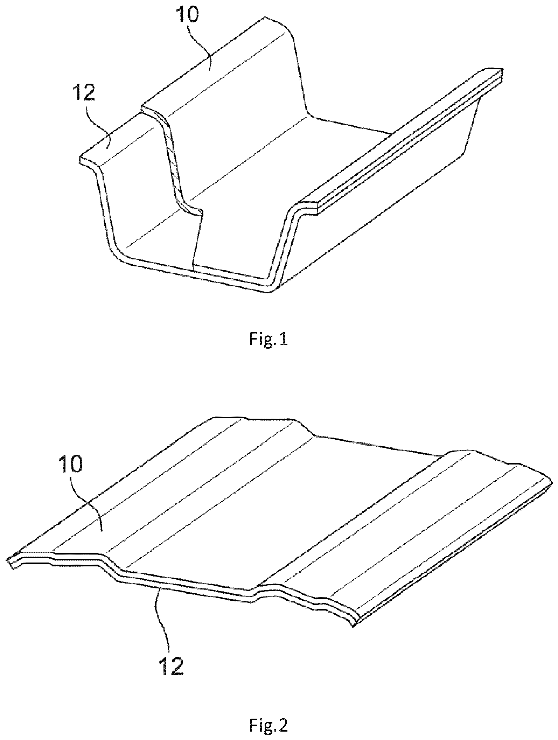

Fig. 1 shows the three-dimensional preform obtained after step 3 using the above method. Fig. 2 shows the three-dimensional preform obtained after step 4, wherein the three-dimensional preform includes two prepreg layers 10 and 12. It can be clearly seen that the original three-dimensional shape (as shown in Fig. 1) of the three-dimensional preform cannot be maintained after step 4 but collapses as shown in Fig. 2 because, in this step, when the three-dimensional preform is reheated to a temperature higher than the melting point of the prepreg resin matrix, the resin matrix changes into a molten state such that the three-dimensional preform becomes soft and then collapses under the gravity of the material itself, which is obviously disadvantageous to the manufacturing of the desired three-dimensional components.

Documents such as EP1046666A1, DE202004003214U1 and WO2004071761A1 disclose products made of composite material in which a metallic layer is sandwiched between two composite layers. However, the purpose of providing such a metallic layer is completely different from the invention.

### Summary of the Invention

The object of the present invention is to solve the above technical problems.

To this end, the present invention provides a semi-product made of a prepreg, including at least a first prepreg layer and a second prepreg layer, with a metal layer laid between the first prepreg layer and the second prepreg layer, characterized in that the metal layer is a metallic net, and in that when thermoplastic resin contained in the first prepreg layer and the second prepreg layer is softened, the metal layer still remains in a solid state.

The term "prepreg" is an intermediate material commonly used for making a composite material and has a common meaning in the field of composite materials, i.e., a combination of a resin matrix and a reinforcement obtained by impregnating the reinforcement with the resin matrix under strictly controlled conditions.

The term "semi-product" is an intermediate product which still needs to be further processed for making a final product.

According to the present invention, since a metal layer is added between the prepreg layers, the three-dimensional preform made of the semi-product can be supported by the metal layer during a reheating process prior to overmolding, thereby well maintaining its three-dimensional shape without collapsing. In addition, since the added metal layer is retained in a final overmolded product, it can enhance mechanical strength of the product and serve as a supplementary reinforcement. Further, since the metal layer is a net, meshes on the metallic net help to reduce the weight of final products and save product costs. Moreover, in the subsequent processing (such as hot stamping) of the semi-products, the adjacent layers of the prepreg resin matrixes can fuse and connect together through the meshes of the metallic net, thereby fixing the metallic net between the two prepreg layers more firmly.

When thermoplastic resin contained in the first prepreg layer and the second prepreg layer is softened, the metal layer still remains in a solid state. Those skilled in the art can select a suitable metal according to the characteristics of the thermoplastic resin used, so that the metal layer is not yet molten when the semi-product is heated to make the thermoplastic resin softened, in such a manner that the prepreg layers can be better supported during thermoforming.

The semi-product according to the present invention may also include one or more of the following features:
- Preferably, the first prepreg layer and the second prepreg layer have the same shape and dimension as those of the metallic net. In this case, the metallic net can cover the entire prepreg layer to provide support thereto at every point without leaving "support blind points". Thus, the three-dimensional preform made of the semi-product can better maintain its three-dimensional shape during reheating process prior to overmolding.
- Preferably, the metal contains iron, which can enhance the mechanical properties of the final products.

- The metal can be selected from the group consisting of iron, mild steel, copper alloy and aluminum alloy.
- A polypropylene film may also be laid between the first prepreg layer and/or the second prepreg layer and the metallic net. Since the polypropylene film can fill in the metallic meshes to discharge the air entrapped therein, the uniformity of the product can be improved greatly. Further, this is also advantageous for enhancing adhesion between the metallic net and the prepreg layers.
- Preferably, the polypropylene film has the same shape and dimension as the metallic net.
- Preferably, a reinforcing material in the prepreg is carbon or glass.

The present invention also relates to a three-dimensional preform, characterized in that it is made of the semi-product by means of hot stamping.

In addition, the present invention also relates to an overmolded part, characterized in that it comprises at least one three-dimensional preform as described above and a thermoplastic resin portion overmolded on the three-dimensional preform.

Preferably, the overmolded part is a motor vehicle component, and in particular a rear closing component of a motor vehicle.

### Brief Description of the Drawings

The present invention will be described in more detail hereinafter with reference to the drawings. It should be readily appreciated by those skilled in the art that the drawings described herein are for illustration purposes only and are not intended to limit the scope of the present invention in any way. Identical or like structures are indicated with identical or like reference numerals. For illustration purposes, these drawings are not necessarily drawn in proportion.
Fig. 1 is a perspective view of a prepreg three-dimensional preform before heating in the prior art;
Fig. 2 is a perspective view of the prepreg three-dimensional preform after heating in the prior art;
Fig. 3 is a perspective view of a semi-product made of the prepreg according to the present invention;
Fig. 4 is an exploded perspective view of the semi-product of Fig. 3;
Fig. 5 shows the process of machining the semi-product of Fig. 3 into the three-dimensional preform;
Fig. 6 is a perspective view of the three-dimensional preform obtained by the process of Fig. 5;
Fig. 7 shows an internal structure of the three-dimensional preform of Fig.6;
Fig. 8 shows the entire manufacturing process from a commecercially available prepreg to a final three-dimensional component; and
Fig. 9 is a perspective view of an embodiment of the final three-dimensional component according to the present invention.

### Detailed Description of the Embodiments

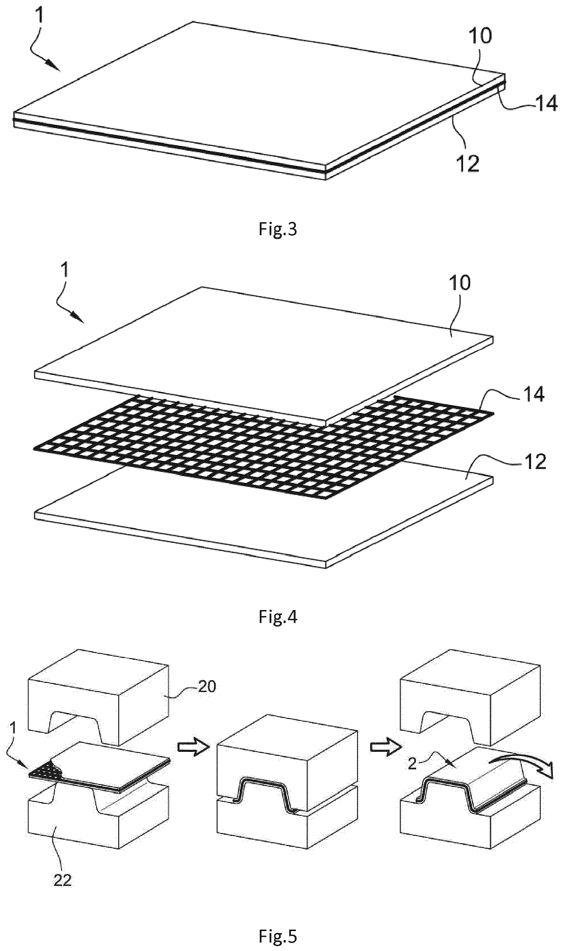

Figs 1 and 2 were described in the Background and will not be reiterated herein. Fig. 3 shows a perspective view of a semi-product 1 made of a prepreg according to an embodiment of the present invention. Fig. 4 better shows the structure of the semi-product 1 in an exploded view. In the embodiment, the semi-product 1 comprises a first prepreg layer 10, a second prepreg layer 12 and a metallic layer sandwiched therebetween. It can be appreciated that the semi-product 1 can comprise more prepreg layers and/or metallic layers, which can be determined by those skilled in the art according to specific design targets. For instance, in an embodiment, the semi-product 1 comprises a first, a second and a third prepreg layer stacked one on top of the other, and a metallic layer is sandwiched between every two adjacent prepreg layers. In another embodiment, the semi-product 1 comprises a first, a second and a third prepreg layer stacked one on top of the other, but a metallic layer is only sandwiched between the first and the second prepreg layer.

The term "prepreg" is an intermediate material commonly used for making a composite material and most often composed of a resin matrix and a reinforcement (such as fibers or fabrics) impregnated in the matrix. In the present embodiment, the first prepreg layer 10 and the second prepreg layer 12 are both composed of a thermoplastic resin matrix and a reinforcement impregnated in the matrix, and the reinforcement can be carbon and/or glass fibers or fabrics. The metallic layer can be made of any suitable metal or alloy (such as iron, mild steel, copper alloy and aluminum alloy). Preferably, the metallic layer is made of ferrous materials, for the purpose of enhancing the mechanical properties of a final product. The metallic layer may be either solid or with perforations. In the present embodiment, the metallic layer is a metallic net 14 with meshes, which reduces the weight of the final product and save production costs. Moreover, in the subsequent processing (such as hot stamping) of the semi-products, the adjacent layers of the prepreg resin matrixes can fuse and connect together through the meshes of the metallic net, thereby fixing the metallic net between the two prepreg layers more firmly. Preferably, a polypropylene film can further be laid between the metallic layer and its adjacent prepreg layer 10 and/or 12. Since the polypropylene film can fill in the metallic meshes to discharge the air entrapped therein, the uniformity of the product can be improved greatly. Further, this is also advantageous for enhancing adhesion between the metallic net and the prepreg layers.

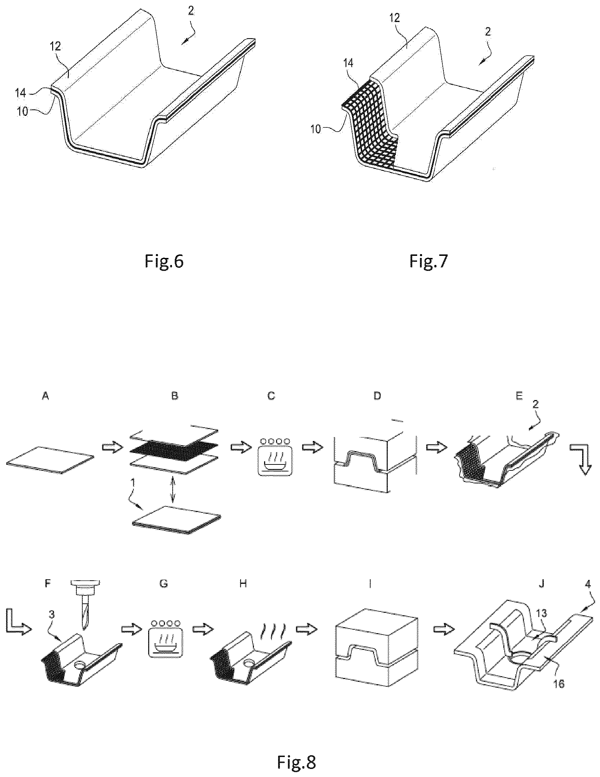

In the embodiments shown in Figs. 3 and 4, the first prepreg layer 10 and the second prepreg layer 12 have the same shape and dimension as those of the metallic net 14. Thus, in the subsequent processing step, the three-dimensional preform (see Figs. 6 and 7) made of the semi-product 1 can be fully supported by the metallic net 14 during a reheating process to well maintain its three-dimensional shape.

Fig. 5 shows the process of machining the semi-product 1 of Fig. 3 into the three-dimensional preform 2, and Figs. 6 and 7 show the three-dimensional preform 2 obtained by the process. For showing the internal structure of the three-dimensional preform 2 clearly, a portion of the second prepreg layer 12 is removed from Fig. 7. The semi-product 1, before being placed into a forming die, is heated to a temperature higher than the melting point of the prepreg resin matrix. Then, the hot semi-product 1 is placed into the forming die (such as, hot stamping dies 20, 22 in Fig. 5) for three-dimensional forming. It should be noted that in the forming step, the metallic layer in the semi-product 1 is formed as well. Thereafter, the semi-product is demoulded at a temperature lower than the melting point of the prepreg resin matrix to obtain the three-dimensional preform 2 of a desired three-dimensional shape, as shown in Figs. 6 and 7. It should be appreciated that the three-dimensional shapes as shown in Figs. 6 and 7 are for illustration purposes only, and the three-dimensional preform 2 can have more complex three-dimensional shapes for different applications. The full process for making a three-dimensional component 4 that needs to be partially or wholly reinforced is described hereinafter with reference to Fig. 8. For easy depiction, the process is divided into ten steps:
Step A: cutting a purchased prepreg and a metallic net into a suitable shape and dimension (which is normally obtained by two-dimensionally deploying a desired three-dimensional preform);
Step B: stacking a plurality of layers of prepregs and metallic nets of a suitable shape and dimension as required to form a semi-product according to the present invention; Step C: heating the semi-product to a temperature higher than the melting point of the prepreg resin matrix;
Step D: three-dimensionally forming the semi-product in a die (such as, a hot stamping die);
Step E: demoulding at a temperature lower than the melting point of the prepreg resin matrix to obtain a three-dimensional preform 2 of a desired three-dimensional shape;
Step F: mechanically machining (such as contour finishing or drilling) the three-dimensional preform after cooling to make it into a three-dimensional preform 3 of a desired final dimension and geometrical configuration;
Step G: reheating the three-dimensional preform 3 to a temperature higher than the melting point of the prepreg resin matrix, so as to provide the prepreg resin matrix and the overmolded resin with good adhesion in subsequent overmolding;
Step H: transferring the hot three-dimensional preform to an overmolding die;
Step I: conducting an overmolding step in an overmolding die, i.e., overmolding a thermoplastic resin portion 16 on the three-dimensional preform 3 (for example by means of injection molding); and
Step J: demoulding to finally obtain a three-dimensional component 4 including a reinforcement (composed of the three-dimensional preform 3) and the overmolded resin portion 16.

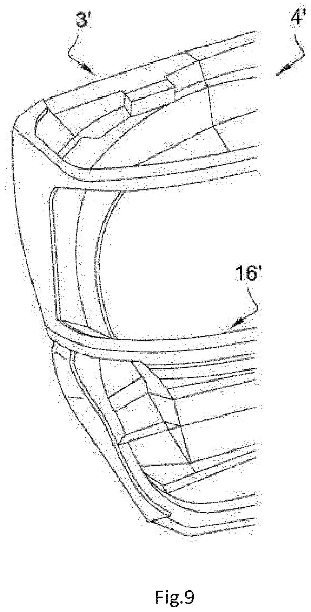

The resultant three-dimensional component 4 may be for example a component on a motor vehicle, such as a rear closing component thereof. Fig. 9 shows an example of the three-dimensional component, wherein it is an automobile trunk closing component 4' composed of a prepreg three-dimensional preform 3' having a metallic layer and an overmolded resin portion 16'.

Since the metallic layer is added between the prepreg layers, the three-dimensional preform, in steps G and H, can be supported by the metallic layer and therefore maintains well its three-dimensional shape. Thus, the metal for making the metallic layer needs to have a melting point that is higher than that of the prepreg thermoplastic resin matrix such that, in step G, the metallic layer would not change into a molten state, but supports the molten resin matrix. In addition, since the added metallic layer is retained in the final overmolded product, it can also enhance the mechanical strength of the product and serve as a supplementary reinforcement.

The drawings and the above description describe the non-limitative particular embodiments of the present invention. Some conventional aspects have been simplified or omitted in teaching the invention principle. Those skilled in the art should know that the variations from these embodiments fall into the scope of the present invention. It should be understood by those skilled in the art that the above features can be combined in various ways to form a plurality of variations of the present invention. Thus, the present invention is not limited to the above particular embodiments, but defined by the following claims and their equivalents.

## Claims

1. A semi-product made of a prepreg, including at least a first prepreg layer and a second prepreg layer, with a metal layer laid between the first prepreg layer and the second prepreg layer, **characterized in that** the metallic layer is a metallic net and in that when thermoplastic resin contained in the first prepreg layer and the second prepreg layer is softened, the metal layer still remains in a solid state.

2. The semi-product according to claim 1, **characterized in that** the first prepreg layer and the second prepreg layer have the same shape and dimension as those of the metallic net.

3. The semi-product according to claim 1, **characterized in that** the metal is selected from the group consisting of iron, mild steel, copper alloy and aluminum alloy.

4. The semi-product according to claim 1, **characterized in that** a polypropylene film is laid between the first prepreg layer and/or the second prepreg layer and the metallic net.

5. The semi-product according to claim 4, **characterized in that** the polypropylene film has the same shape and dimension as the metallic net.

6. A three-dimensional preform, **characterized in that** it is made of the semi-product according to any one of the preceding claims by means of hot stamping.

7. An overmolded part, **characterized in that** it comprises at least one three-dimensional preform according to claim 6 and a thermoplastic resin portion overmolded on the three-dimensional preform.

8. The overmolded part according to claim 7, **characterized in that** it is a motor vehicle component.

9. The overmolded part according to claim 7, **characterized in that** it is a rear closing component of a motor vehicle.

## Patentansprüche

1. Ein Halbprodukt aus einem Prepreg, das mindestens eine erste Prepreg-Schicht und eine zweite Prepreg-Schicht umfasst, wobei eine Metallschicht zwischen der ersten Prepreg-Schicht und der zweiten Prepreg-Schicht angeordnet ist, **dadurch gekennzeichnet, dass** die Metallschicht ein metallisches Netz ist und dass, wenn das in der ersten Prepreg-Schicht und der zweiten Prepreg-Schicht enthaltene thermoplastische Harz erweicht wird, die Metallschicht immer noch in einem festen Zustand bleibt.

2. Das Halbprodukt nach Anspruch 1, **dadurch gekennzeichnet, dass** die erste Prepreg-Schicht und die zweite Prepreg-Schicht die gleiche Form und Abmessung wie das Metallnetz haben.

3. Das Halbprodukt nach Anspruch 1, **dadurch gekennzeichnet, dass** das Metall aus der Gruppe bestehend aus Eisen, Baustahl, Kupferlegierung und Aluminiumlegierung ausgewählt ist.

4. Das Halbprodukt nach Anspruch 1, **dadurch gekennzeichnet, dass** ein Polypropylenfilm zwischen die erste Prepreg-Schicht und/oder die zweite Prepreg-Schicht und das Metallnetz gelegt wird.

5. Das Halbprodukt nach Anspruch 4, **dadurch gekennzeichnet, dass** der Polypropylenfilm die gleiche Form und Abmessung wie das Metallnetz hat.

6. Ein dreidimensionaler Vorformling, **dadurch gekennzeichnet, dass** er aus dem Halbprodukt nach einem der vorhergehenden Ansprüche durch Heißprägen hergestellt ist.

7. Ein übergeformtes Teil, **dadurch gekennzeichnet, dass** es mindestens einen dreidimensionalen Vorformling nach Anspruch 6 und einen auf den dreidimensionalen Vorformling übergeformten thermoplastischen Harzanteil umfasst.

8. Das übergeformte Teil nach Anspruch 7, **dadurch gekennzeichnet, dass** es ein Kraftfahrzeugbauteil ist.

9. Das übergeformte Teil nach Anspruch 7, **dadurch gekennzeichnet, dass** es ein hinteres Schließteil eines Kraftfahrzeugs ist.

## Revendications

1. Un semi-produit fait en un pré-imprégné, comprenant au moins une première couche de pré-imprégné et une deuxième couche de pré-imprégné, avec une couche métallique disposée entre la première couche de pré-imprégné et la deuxième couche de pré-imprégné, **caractérisé en ce que** la couche métallique est un filet métallique et **en ce que**, lorsque la résine thermoplastique contenue dans la première couche de pré-imprégné et la deuxième couche de pré-imprégné est ramollie, la couche métallique reste encore à l'état solide.

2. Le semi-produit selon la revendication 1, **caractérisé en ce que** la première couche de pré-imprégné et la deuxième couche de pré-imprégné ont la même forme et les mêmes dimensions que celles du filet métallique.

3. Le semi-produit selon la revendication 1, **caractérisé en ce que** le métal est choisi dans le groupe constitué par le fer, l'acier doux, l'alliage de cuivre et l'alliage d'aluminium.

4. Le semi-produit selon la revendication 1, **caractérisé en ce qu'**un film de polypropylène est placé entre la première couche de pré-imprégné et/ou la deuxième couche de pré-imprégné et le filet métallique.

5. Le semi-produit selon la revendication 4, **caractérisé en ce que** le film de polypropylène a la même forme et la même dimension que le filet métallique.

6. Une préforme tridimensionnelle, **caractérisée en ce qu'**elle est constituée du semi-produit selon l'une quelconque des revendications précédentes au moyen d'un estampage à chaud.

7. Une pièce surmoulée, **caractérisée en ce qu'**elle comprend au moins une préforme tridimensionnelle selon la revendication 6 et une partie en résine thermoplastique surmoulée sur la préforme tridimensionnelle.

8. La pièce surmoulée selon la revendication 7, **caractérisée en ce qu'**il s'agit d'un composant de véhicule automobile.

9. La pièce surmoulée selon la revendication 7, **caractérisée en ce qu'**il s'agit d'un composant de fermeture arrière d'un véhicule automobile.
